# EUROPEAN PATENT SPECIFICATION

(11) **EP 1 051 845 B1**
(45) Date of publication and mention of the grant of the patent: **31.03.2004**
(21) Application number: 98965237.5
(22) Date of filing: 08.12.1998
(51) Int. Cl.: H04N 5/45, G11B 27/034

(54) **APPARATUS FOR GENERATING THE DIGITAL DATA FOR THE PICTURES OF AN ANIMATION/INFORMATION SEQUENCE FOR AN ELECTRONIC DEVICE**
GERÄT ZUR ERZEUGUNG DER DIGITALEN DATEN FÜR BILDER IN EINER ANIMATIONS-/INFORMATIONSFOLGE FÜR EINE ELEKTRISCHE VORRICHTUNG
DISPOSITIF SERVANT A GENERER LES DONNEES NUMERIQUES DES IMAGES D'UNE SEQUENCE D'ANIMATION/INFORMATION DESTINEE A UN APPAREIL ELECTRONIQUE

(30) Priority: 20.12.1997 DE 19757046
(43) Date of publication of application: 15.11.2000
(73) Proprietor: DEUTSCHE THOMSON-BRANDT GMBH, 78048 Villingen-Schwenningen (DE)
(72) Inventor: WINTER, Marco, D-30173 Hannover (DE); KOCHALE, Axel, D-31832 Springe (DE)
(74) Representative: Schäferjohann, Volker Willi, Dipl.-Phys.
(86) International application number: PCT/EP1998/007979
(87) International publication number: WO 1999/033263

(56) References cited:
- EP-A- 0 725 541
- EP-A- 0 800 174

## Description

The invention relates to an apparatus for generating the digital data for the pictures of an animation/information sequence for an electronic device, in particular one appertaining to consumer electronics.

### Prior art

The invention is based on an apparatus for generating the digital data for the pictures of an animation/information sequence of the generic type of the independent Claim 1. From video technology, it is known to provide so-called sub-picture decoding devices for the display e.g. of subtitles on the screen of a television set, for example in a DVD player. DVD players of this type are already commercially available and contain the abovementioned sub-picture decoding device (a sub-picture decoder). Such sub-picture decoding devices also come into consideration in the case of receivers for digital television, for example SET-TOP box. The abovementioned sub-picture decoding devices are known to a person skilled in the art. A description of the sub-picture decoding devices is found for example in the DVD standard DVD Specification for Read-Only Disk, Part 3, Video Specification, Version 1.0, August 1996, 5.4.3 Sub-Picture Unit (SPU). A more detailed description of such sub-picture decoding devices is also found in EP-A-0 725 541.

An animation/information sequence in the sense of the invention that is presented here is understood to mean a number of pictures serving e.g. to display moving objects. In this case, an object may be a simple rectangle or else have a complicated shape. An example of an animation sequence that is mentioned is an intermission picture, in which moving objects are displayed on the screen after the manner of a "screen saver". Specific operating instructions which are generated by symbols and change or move in any manner are also mentioned as an example of an information sequence.

In order to generate sequences of this type, it is known from the prior art to provide in the corresponding device additional hardware which has stored the picture sequence as a complete bit-map sequence in a memory and inserts it on the screen. However, this requires a considerable outlay with regard to the circuitry realization and with regard to the memory space.

### Invention

The object of the invention is to reduce the outlay on circuitry for the generation of the digital data for the pictures of an animation/information sequence in an electronic device. The object is achieved by means of the features of the independent Claim 1. According to the invention, the pictures of the animation/information sequence are brought into a coded form and programmed into a memory of the device. The pictures are then decoded by a sub-picture decoding unit when the animation/information sequence is supposed to be displayed, the said sub-picture decoding unit already being present in the device in any case and otherwise being used for other purposes. For the pictures of the animation/information sequence, then, a data unit is programmed which contains at least a) the bit-map data for at least one object to be displayed, and b) a number of display control command sequences which serve for placing the object to be displayed in the picture, a display control command sequence containing at least one command for defining the display location in the picture.

The advantage of this solution according to the invention principally consists in the fact that it is not necessary to implement an additional, relatively complicated circuit unit for the generation of the pictures of an animation/information sequence in the device. This is because the sub-picture decoding device which is already present in any case is used for this purpose. In its otherwise customary use, this sub-picture decoding device serves to decode data units for sub-pictures, that is to say in particular for the generation of subtitles of a video film. The associated data are stored for example on a DVD disc in addition to the actual video data for the film, are then removed from the bit stream delivered by the DVD disc, decoded and inserted into the video picture. According to the invention, the sub-picture decoding device now additionally serves for generating the pictures for an animation/information sequence as well. The fact that the data unit for the animation/information sequence 'is stored in coded form in the memory means that the memory outlay is also frequently reduced.

Advantageous developments and improvements of the apparatus specified in Claim 1 are possible by virtue of the measures evinced in the dependent Claims 2 to 9. If, for example, continuous repetition of the animation/information sequence is desired, the measure according to Claim 4 is advantageous, in the case of which a display control command sequence contains a pointer command which defines the beginning of the next display control command sequence, the pointer command of the last display control command sequence pointing to the beginning of another display control command sequence, in particular the first, of the data unit.

It is also very advantageous if the bit-map data for the object to be displayed are stored in compressed form. Memory space is then additionally saved as a result. Run length coding is used, in particular, for the bit-map data in the case of the sub-picture decoding devices which are known to be used in the DVD players. Therefore, the same run length coding is likewise used, in an advantageous manner, for the pictures of the animation/information sequence.

### Drawings

Exemplary embodiments of the invention are illustrated in the drawings and are explained in more detail in the description below. In the figures:
- Figure 1: shows a DVD player and a connected television set which shows an animation sequence;
- Figure 2: shows an example of a frame format for the data of the data unit for the animation/information sequence;
- Figure 3: shows a first example of a data unit for a simple animation sequence;
- Figure 4: shows the representation of an animation sequence as a continuous loop;
- Figure 5: shows the order of the pictures in accordance with the data unit according to Figure 3;
- Figure 6: shows a further example of a data unit of an animation sequence, and
- Figure 7: shows a block diagram of the apparatus according to the invention.

### Description of the invention

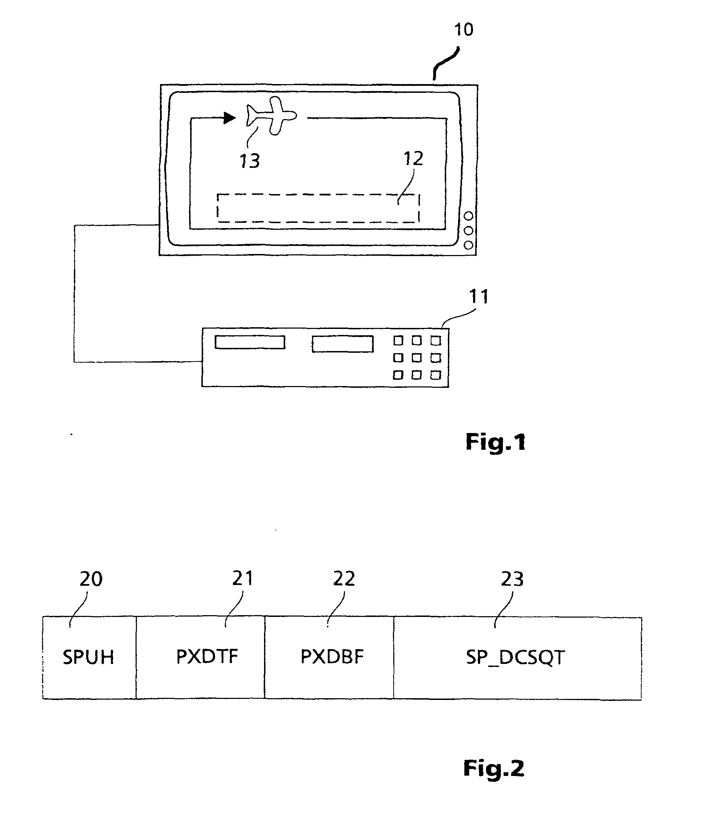

In Figure 1, the reference numeral 10 designates a conventional TV set. The reference numeral 11 designates a DVD player. The latter is connected to the TV set 10 via a coaxial lead, for example. The DVD player 11 generates the analogue television signal which is fed into the TV set via the antenna socket, for example. The reference numeral 12 designates an inserted sub-picture which is provided for example for the display of subtitles during a video film. This inserted sub-picture is illustrated by dashed lines since, in accordance with the exemplary embodiment, it would not be visible at the same time as the animation/information sequence. The reference numeral 13 designates an object which is displayed during an animation sequence on the screen of the TV set 10. An aeroplane is displayed as the object 13. The arrow in Figure 1 indicates that the aeroplane flies in a right-hand trajectory. Four objects must therefore be stored for the animation sequence represented. Firstly, an aeroplane which is directed towards the right, secondly an aeroplane which is directed downwards, thirdly an aeroplane which is directed towards the left, and fourthly an aeroplane which is directed upwards. Furthermore, the animation sequence comprises display control command sequences which then in each case place the object to be displayed at the correct location in the picture and determine the length of time for which the object is to be displayed at this position in the picture. Of course, animation sequences can be configured in any other desired manner. An example of an information sequence that is mentioned is the representation of a DVD player on the screen, in front of which, for example, a DVD disc is positioned which moves back and forth in order to indicate, after the DVD player has been switched on, that it is first of all necessary to insert a DVD disc into the DVD player. Of course, any other desired information sequences of this type are also possible here.

Figure 2 gives a rough illustration of the known data format of a so-called sub-picture unit (SPU). Such a sub-picture unit is normally provided in each case for a subtitle of a video film. The reference numeral 20 designates a data field for a header (SPUH) of the sub-picture unit. The reference numeral 21 designates a data field for the compressed pixel data of a first field of the sub-picture (PXDTF), and the reference numeral 22 correspondingly designates a data field for the compressed pixel data (PXDBF) of the second field of the sub-picture. Finally, the reference numeral 23 designates a data field for a display control command sequence table (SP_DCSQT). So-called display control command sequences (SP_DCSQ) are stored in the data field 23. The arrangement of the PXDTF and PXDBF data is one possible example of such an arrangement. It may also be chosen differently. The individual display control commands will not be discussed in detail in this patent application because the possible display control commands are already specified by the known DVD standard (Version 1.0), where they are also individually explained with a high degree of accuracy, with the result that, therefore, reference is expressly made to this publication for the disclosure of the invention.

The pixel data in the data fields 21 and 22 determine the displayed pattern of the sub-picture indicated. For each pixel of a line of the sub-picture, a data word two bits wide specifies whether the pixel is a background pixel or a foreground pixel or whether the picture is to be highlighted in a first manner or in a second manner. These four distinctions can be made using the two bits. Specifically, the binary values denote:
00 = background pixel,
01 = foreground pixel,
10 = pixel displayed with highlighting One, and
11 = pixel displayed with highlighting Two.

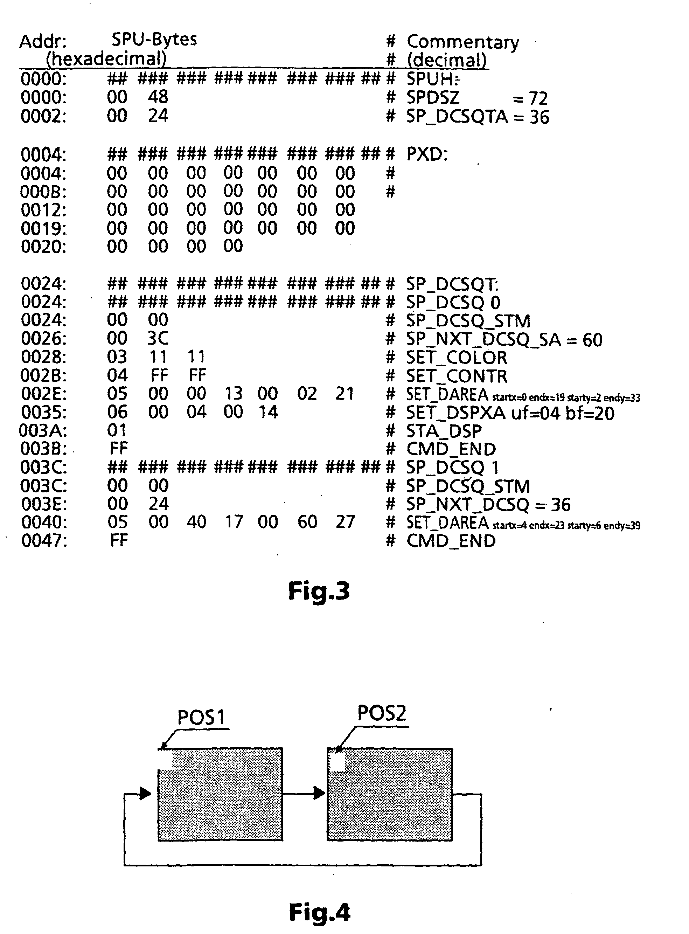

It must be taken into account that the individual pixel data are not stored in this pure form in the memory, but rather in compressed form. Run length coding is carried out for this purpose. The run length coding method is likewise explained with a high degree of accuracy in the abovementioned DVD standard (Version 1.0). Seven coding rules are stipulated for run length coding in the DVD standard mentioned. The run length coding operates such that a respective line of a field of the sub-picture to be displayed is run length-coded. However, the individual rules will not be precisely explained here since they are sufficiently known from the abovementioned DVD standard. A high degree of compression is obtained by the run length coding in the case of simple picture contents. The frame format according to Figure 2 for the sub-picture unit is also used for the data unit for the animation/information sequence according to the invention. An example of a data unit for a simple animation sequence is specified in Figure 3. The left-hand part of Figure 3 in each case specifies firstly the memory address and secondly the data bytes stored under the specified address, in hexadecimal notation. The right-hand part of Figure 3 in each case specifies a short commentary for explanation. The upper part of Fig. 3, headed with SPUH, corresponds to the header 20 of Figure 2. The middle part of Figure 3, headed with PXD, corresponds to the data fields 21 and 22 for the bit-map data of the objects to be displayed. The lower part of Figure 3, headed with the reference symbol SP_DCSQT, corresponds to the data field 23 according to Figure 2.

In the header of the data unit for the animation sequence, the size of the data unit is specified with the command SPDSZ. In this case, all the numerical details are specified in decimal notation in the right-hand part of Figure 3. The start of the data area for the display control commands is specified by the command SP_DCSQTA. The bit-map data for a rectangle which is to be displayed and comprises 20x32 pixels are specified in the PXD area. In this case, each pixel is declared as a background pixel. The data in the PXD area represent the data for a rectangle divided into the corresponding lines for the first field and the second field. All the data for the lines of the first field are stored in combined form in the first part of the PXD area, and the data for the lines of the second field of the rectangle are accordingly combined in the second part of the PXD area.

The display control commands of a sequence are in each case successively listed in the data area for the display control command sequences. The command (timestamp) SP_DCSQ_STM defines the instant at which the display control command sequence is to be processed relative to the start of the entire data unit. The detail in the display control command sequence SP_DCSQ0 specifies that the first display control command sequence SP_DCSQ0 is started directly after the start of the data unit. The pointer command SP_NXT_DCSQ_SA points to the beginning of the next display control command sequence. In the case of the first display control command sequence SP_DCSQ0, the memory address $003C is specified, which also exactly corresponds to the beginning of the second display control command sequence SP_DCSQ1. The colour of the pixels of the sub-picture unit for background and foreground, etc. is defined by the command SET_COLOR. The next command SET_CONTR sets the contrast for the pixels of the sub-picture unit. The specified value sets the contrast to the maximum possible value. The command SET_DAREA specifies the x and y coordinates for the start and end points of the rectangular area to be displayed in the picture. The command SET_DSPXA specifies the beginning of the area with the bit-map data for the first and second fields. The display of the object to be displayed is started with the command STA_DSP. The end command CMD_END indicates the end of the display control command sequence.

Afterwards, a jump is made to that display control command sequence which has been specified by the information SP_NXT_DCSQ_SA. The programme continues, therefore, with the second display control command sequence SP_DCSQ1. The latter specifies, by the information SP_DCSQ_STM in the case illustrated, that this display control command sequence is to be processed without delay directly after the first display control command sequence. The next pointer command SP_NXT_DCSQ_SA again specifies the beginning of the next display control command sequence to be processed. In this case, the start of the first display control command sequence SP_DCSQ0 is specified at this point. A peculiarity resides herein, because this is not provided in this way in the known DVD standard (Version 1.0). Specifically, the DVD standard provides for the last display control command sequence of a sub-picture unit always to point to the beginning of the last display control command sequence, in other words to itself. This is not the case here, in order that the animation sequence is repeated from the beginning. Thus, a continuous loop is produced in which the movement of the objects is continuously repeated in its entirety. An example that is mentioned is the aeroplane which is shown in Figure 1 and flies continuously in a right-hand trajectory. The effect that is also simultaneously achieved by this peculiarity is that the time details for the individual display control command sequences in the example according to Figure 3 in each case only ever have the value zero (see the information details SP_DCSQ_STM). This then has the effect, namely, that each display control command sequence is activated by the sub-picture decoding device only for the duration of at most one video frame. However, this depends on the implementation of the sub-picture decoding device. This need not apply to correspondingly expanded sub-picture decoding devices.

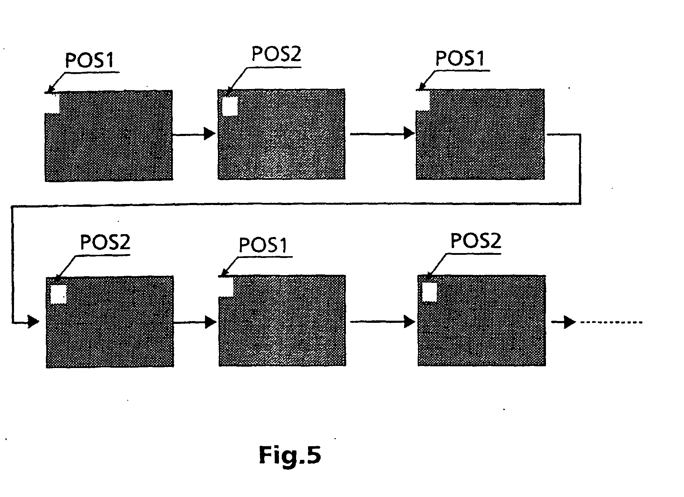

The data unit shown in Figure 3 generates a simple animation sequence in which a rectangle having a size of 20x32 pixels is displaced from the position POS1 (X=0, Y=2) to the other position POS2 (X=4, Y=6). In this case, the rectangle also jumps back again to the original position POS1. The continuous loop illustrated in Figure 4 is produced. The first six video frames of the continuous loop are illustrated in succession again in Figure 5.

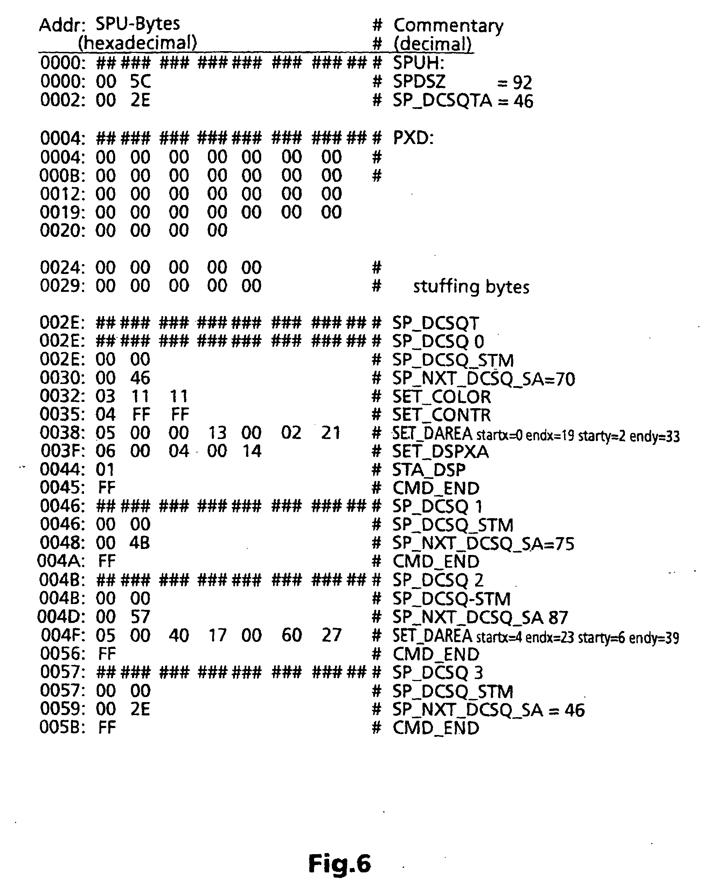

As already mentioned, the duration for the activation of a display control command sequence depends on the concrete implementation of the sub-picture decoding device. In the DVD standard (Version 1.0), implementations for a duration of one field and one frame are possible for a display control command sequence. The data unit according to Figure 3 is designed in such a way that a duration of one frame is provided for each display control command sequence. Figure 6 illustrates another example of a data unit, which is provided for an implementation in which a duration of one field is provided for each display control command sequence. Figure 6 is constructed in the same way as Figure 3. A difference resides principally in the fact that so-called stuffing bits are entered in the memory addresses $0024 to $002D. These stuffing bits serve merely to adapt the size of the PXD area to the size of the entire data unit.

The essential difference is that four display control command sequences SP_DCSQ0 to SP_DCSQ3 are provided in the example in accordance with Figure 6. This is due to the fact that in this example only a propagation delay of one field is provided for each display control command sequence. Therefore, the first display control command sequence SP_DCSQ0 is succeeded by another, further display control command sequence SP_DCSQ1, which effects no change in the displayed picture, however. What is involved is practically an empty display control command sequence. In the same way, the picture-changing display control command sequence SP_DCSQ2 is again succeeded by an empty display control command sequence SP_DCSQ3. The display control command sequence SP_DCSQ0 contains the picture-changing display control commands SET_COLOR, SET_CONTR and SET_DAREA. These are applicable to the first field of a respective video frame. The display control command sequence SP_DCSQ1 is applicable to the second field of the video frame. The picture content is not changed herein, with the result that the display does not change relative to the first field. The display control command sequence SP_DCSQ2 sets new start and end coordinates for the rectangle to be displayed. A change in the picture is then visible in this case. However, the display control command sequence SP_DCSQ2 once again applies only to the first field of the video frame. No change is undertaken in the second field of this video frame since the associated display control command sequence SP_DCSQ3 contains no picture-changing commands. The processing of the display control command sequence SP_DCSQ3 is then in turn followed by the processing of the display control command sequence SP_DCSQ0. Thus, a continuous loop is likewise produced in this case.

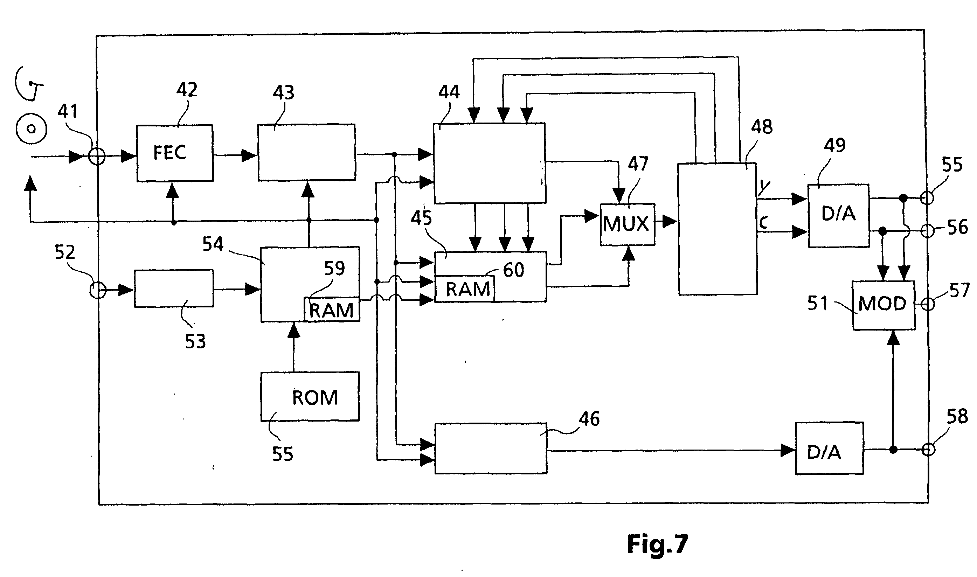

The block diagram of the arrangement according to the invention will now be explained with reference to Figure 7. The reference numeral 41 designates a serial data input. A bit stream is present here which contains both video data and audio data and the data for the subtitles to be displayed. The data can either have been read from an optical storage disc (for example DVD) or magnetic tape, etc. or have been received via an antenna/satellite antenna or a broadband cable from a broadcasting station. The apparatus would be used in a DVD player in the first case, and in a satellite receiver or a set-top box for digital television reception in the other cases. The incoming data are then firstly subjected to error detection and correction in a correction unit 42. The data subsequently pass into a separator circuit 43, in which the video, audio and sub-picture data, which are still mixed together, are separated and in each case transferred accordingly either to a video decoding unit 44, a sub-picture decoding unit 45 or an audio decoding unit 46. The decoded video and sub-picture data are entered into a multiplexing unit 47. The multiplexing unit 47 is controlled by the sub-picture decoding unit 45. At the output of the multiplexing unit 47, the data for the individual pixels of the video picture are successively input into a TV signal coding device 48. At the outputs of the TV signal coding device, the standard-conforming luminance and chrominance signal (Y, C) is output in digital form (PAL, SECAM, NTSC). These signals are then converted into analogue signals in the digital-to-analogue conversion unit 49 and forwarded to corresponding outputs 55, 56. The associated audio signal is already generated in a standard-conforming manner in the decoding device 46 and is converted into an analogue audio signal (only a mono signal is illustrated here) in the digital-to-analogue conversion unit 50. This audio signal is made available at the output 58.

The implementation may, on the other hand, also be such that the analogue luminance and chrominance signal and the audio signal are modulated onto different carriers in a modulation unit 51 and output as a corresponding TV signal via just one output 57.

In addition, an infrared input is designated by the reference 52. This infrared input serves to receive the infrared signals from a remote control unit. The corresponding interface circuit which analyses the received infrared signals is designated by the reference numeral 53. The reference numeral 54 designates a microcontroller. The latter also receives the conditioned command words from the infrared interface 53. The microcontroller 54 also serves to control the units 42 to 46 via a corresponding control bus. Control is effected for example by the abovementioned units being initialized to specific starting values. In the event of an IR command which activates an animation sequence, for example, being input, the microcontroller 54 reads from the ROM memory 55 the associated data unit for the display of the pictures of the animation sequence. The data unit for the animation sequence is loaded into the internal memory of the sub-picture decoding unit 45 via a separate data bus. It is also started at the same time via the control bus. The sub-picture decoding unit then inputs the decoded data at the preprogrammed locations into the bit stream for the entire video picture. For this purpose, the sub-picture decoding unit 45 controls the multiplexing unit 47 with correct timing in accordance with the signals, input into it by the TV signal coding device 48, for the horizontal and vertical sync pulses and the pixel clock signal. If there is no bit stream present for the main picture into which the sub-picture for the animation sequence is inserted, the TV signal coding device 48 can output a colour, empty picture.

Further details regarding the structure and the method of operation of the standard sub-picture decoding unit 45 are contained in EP-A-0 725 541. In this regard, therefore, reference is expressly made to this document.

In accordance with the example that is presented here, the animation/information sequence was started under the control of the user. However, the realization may also be such that the animation/information sequence is started automatically, for example after the device has been switched on. For example in order to simulate a "screen saver" function when a start command for a playback operation has not yet been given. Diverse further alterations and modifications are possible.

## Claims

1. Apparatus for generating the digital data for the pictures of an animation/information sequence for an electronic device, in particular one appertaining to consumer electronics, having a demultiplexing device (43) for separating a bit stream into a main-picture bit stream and a sub-picture bit stream, the sub-picture being displayable together with the main picture and providing information such as subtitles, etc. with respect to the main picture, having a first decoding unit (44) for decoding the main-picture bit stream, having a second decoding unit (45) for decoding the sub-picture bit stream, **characterized in that** a data unit for the animation/information sequence is stored, which is constructed in such a way that it can be decoded by the second decoding unit (45), wherein the second decoding unit (45) further to the sub-picture bit stream can also decode the data unit for the animation/information sequence, the data unit containing at least the following:
a) the bit-map data for at least one object to be displayed,
b) a number ≥2 of display control command sequences (SP_DCSQ) which serve to define the characteristics of the object to be displayed in the picture in accordance with the desired animation/information sequence, a display control command sequence (SP_DCSQ) at least also containing a command for defining the display location of the object in the picture.

2. Apparatus according to Claim 1, in which a display control command sequence (SP_DCSQ) contains a command for defining the instant when the display control commands of the display control command sequence (SP_DCSQ) are supposed to be processed.

3. Apparatus according to Claim 1 or 2, in which the basic shape of an object (13) corresponds to a rectangle.

4. Apparatus according to one of Claims 1 to 3, in which a display control command sequence contains a pointer command (SP_NXT_DCSQ_SA), which defines the beginning of the next display control command sequence (SP_DCSQ), and in which, for continuous repetition of the animation/information sequence, the last display control command sequence (SP_DCSQ) in the data unit has a pointer command (SP_NXT_DCSQ_SA) which points to the beginning of a previous display control command sequence (SP_DCSQ0).

5. Apparatus according to one of the preceding claims, in which the bit-map data (BXD) for the object (13) to be displayed are compressed, in particular by run length coding.

6. Apparatus according to one of the preceding claims, in which the electronic device appertaining to consumer electronics is a DVD player.

7. Apparatus according to one of the preceding claims, in which the data unit for the animation/information sequence is stored in a non-volatile memory (55) of the apparatus.

8. Apparatus according to one of the preceding claims, in which the animation/information sequence is started in response to a particular command which is input by the user.

9. Apparatus according to one of Claims 1-7, in which the animation/information sequence is started automatically after the device is switched on.

## Patentansprüche

1. Vorrichtung zur Erzeugung der digitalen Daten für die Bilder einer Animations-/Informationssequenz für ein elektronisches Gerät, insbesondere Unterhaltungselektronikgerät, mit einer Demultiplexeinrichtung (43) zur Separierung eines Bitstromes in einen Hauptbild-Bitstrom und einen Teilbild-Bitstrom, wobei das Teilbild zusammen mit dem Hauptbild darstellbar ist und Informationen wie Untertitel, etc. zum Hauptbild gibt, mit einer ersten Dekodiereinheit (44) zur Dekodierung des Hauptbild-Bitstromes, mit einer zweiten Dekodiereinheit (45) zur Dekodierung des Teilbild-Bitstromes, **dadurch gekennzeichnet, daß** eine Dateneinheit für die Animations-/Informationssequenz abgespeichert ist, die so aufgebaut ist, daß sie von der zweiten Dekodiereinheit (45) dekodierbar ist wobei die zweite Dekodiereinheit (45) außer dem Teilbild-Bitstrom auch die Dateneinheit für die Animations-/Informationssequenz dekodieren kann und die Dateneinheit wenigstens folgendes enthält:
a) die Bitmap-Daten für mindestens ein darzustellendes Objekt,
b) eine Anzahl ≥2 von Anzeigesteuerungsbefehlssequenzen (SP_DCSQ) die zur Festlegung der Charakteristika des darzustellenden Objektes im Bild entsprechend der gewünschten Animations-/Informationssequenz dienen, wobei eine Anzeigesteuerungsbefehlssequenz (SP_DCSQ) mindestens auch einen Befehl zur Festlegung des Darstellungsortes des Objektes im Bild enthält.

2. Vorrichtung nach Anspruch 1, wobei eine Anzeigesteuerungsbefehlssequenz (SP_DSCQ) einen Befehl zur Festlegung des Zeitpunktes, wann die Anzeigesteuerungsbefehle der Anzeigesteuerungsbefehlssequenz (SP_DSCQ) abgearbeitet werden sollen, enthält.

3. Vorrichtung nach Anspruch 1 oder 2, wobei die Grundform eines Objektes (13) einem Rechteck entspricht.

4. Vorrichtung nach einem der Ansprüche 1 bis 3, wobei eine Anzeigesteuerungsbefehlssequenz einen Zeigebefehl (SP_NXT_DCSQ_SA) enthält, der den Beginn der nächsten Anzeigesteuerungsbefehlssequenz (SP_DCSQ) definiert und wobei zur endlosen Wiederholung der Animations-/Informationssequenz die letzte Anzeigesteuerungsbefehlssequenz (SP_DCSQ) in der Dateneinheit einen Zeigebefehl (SP_NXT_DCSQ_SA) aufweist, der auf den Beginn einer vorherigen Anzeigesteuerungsbefehlssequenz (SP_DCSQ0) zeigt.

5. Vorrichtung nach einem der vorhergehenden Ansprüche, wobei die Bitmap-Daten (BXD) für das darzustellende Objekt (13) komprimiert sind, insbesondere durch Lauflängenkodierung.

6. Vorrichtung nach einem der vorhergehenden Ansprüche, wobei das Unterhaltungselektronikgerät ein DVD-Abspielgerät ist.

7. Vorrichtung nach einem der vorhergehenden Ansprüche, wobei die Dateneinheit für die Animations-/Informationssequenz in einem nichtflüchtigen Speicher (55) der Vorrichtung abgespeichert ist.

8. Vorrichtung nach einem der vorhergehenden Ansprüche, wobei die Animations-/Informationssequenz auf einen besonderen, vom Benutzer eingegebenen, Befehl hin gestartet wird.

9. Vorrichtung nach einem der Ansprüche 1 - 7, wobei die Animations-/Informationssequenz automatisch nach Einschaltung des Gerätes gestartet wird.

## Revendications

1. Appareil de génération de données numériques correspondant aux images d'une séquence d'animation/information pour un dispositif électronique, en particulier un appareil électronique grand public, comportant un dispositif de démultiplexage (43) pour diviser un flot de bits en un flot de bits d'image principale et un flot de bits de sous-image, la sous-image étant affichable en même temps que l'image principale et donnant des informations telles que des sous-titres, etc. par rapport à l'image principale, ayant une première unité de décodage (44) pour décoder le flot de bits de l'image principale, une deuxième unité de décodage ((45) pour décoder le flot de bits de la sous-image, **caractérisé en ce qu'**une unité de données correspondant à la séquence d'animation/information est mise en mémoire et configurée de façon à ce que elle puisse être décodée par la deuxième unité de décodage (45) , dans lequel la deuxième unité de décodage (45) peut, outre le flot de bits de la sous-image, également décoder l'unité de données correspondant à la séquence d'animation/information, l'unité de données contenant au moins les éléments suivants :
a) les données matricielles correspondant à au moins un objet à afficher,
b) un nombre ≥ 2 de séquences d'instructions de commande d'affichage (SP_DCSQ) qui servent à définir les caractéristiques de l'objet à afficher dans l'image selon la séquence d'animation/information souhaitée, une séquence d'instructions de commande d'affichage (SP_DCSQ) contenant également au moins une instruction de définition de l'emplacement d'affichage de l'objet dans l'image.

2. Appareil selon la revendication 1, dans lequel une séquence d'instructions de commande d'affichage (SP_DCSQ) contient une instruction pour définir l'instant où les instructions de commande d'affichage de la séquence d'instructions de commande d'affichage sont supposées être traitées.

3. Appareil selon la revendication 1 ou 2, dans lequel la forme de base d'un objet (13) correspond à un rectangle.

4. Appareil selon une de revendications 1 à 3, dans lequel une séquence d'instructions de commande d'affichage contient une instruction de pointeur (SP_NXT_DCSQ_SA) qui définit le début de la séquence d'instructions de commande d'affichage (SP_DCSQ) suivante, et dans lequel, pour une répétition continue de la séquence d'animation/information, la dernière séquence d'instructions de commande d'affichage (SP_DCSQ) de l'unité de données comprend une commande de pointeur (SP_NXT_DCSQ_SA) qui pointe sur le début d'une séquence précédente d'instructions de commande d'affichage (SP_DCSQ0).

5. Appareil selon l'une des revendications précédentes, dans lequel les données matricielles (BXD) correspondant à l'objet (13) à afficher sont comprimées, en particulier par un codage RLE.

6. Appareil selon l'une des revendications précédentes, dans lequel le dispositif électronique grand public est un lecteur de disque DVD.

7. Appareil selon l'une des revendications précédentes, dans lequel l'unité de données correspondant à la séquence d'animation/information est stockée dans une mémoire non-volatile (55) de l'appareil.

8. Appareil selon l'une des revendications précédentes, dans lequel la séquence d'animation/information démarre en réponse à une instruction particulière qui est entrée par l'utilisateur.

9. Appareil selon l'une des revendications 1 à 7, dans lequel la séquence d'animation/information démarre automatiquement après la mise sous tension du dispositif.
